# EUROPÄISCHE PATENTSCHRIFT

(11) **EP 0 554 491 B1**
(45) Veröffentlichungstag und Bekanntmachung des Hinweises auf die Patenterteilung: **02.07.1997**
(21) Anmeldenummer: 92102025.1
(22) Anmeldetag: 07.02.1992
(51) Int. Cl.: B01D 29/13

(54) **Filterpatrone**
Cartridge filter
Cartouche filtrante

(43) Veröffentlichungstag der Anmeldung: 11.08.1993
(73) Patentinhaber: VOTECH FILTER GmbH, D-52525 Heinsberg (DE)
(72) Erfinder: van Ooijen, Maarten Hendrik, W-5138 Heinsberg (DE)

(56) Entgegenhaltungen:
- EP-A- 0 187 553
- FR-A- 2 186 279
- FR-A- 2 611 147
- GB-A- 2 046 614
- US-A- 1 710 758

## Beschreibung

Die Erfindung bezieht sich auf eine Filterpatrone mit einem hohlzylindrischen, unter axialer Zugspannung stehenden Filterelement, das an seinen beiden Enden jeweils einen Ringflansch trägt und mit wenigstens einem, zum Filterelement koaxial angeordneten Stützkäfig.

Die Erfindung findet Anwendung in der Petrochemie, auf dem Lebensmittelsektor und in der Pharmazie bei Filterpatronen der genannten Bauart, wie sie zur Filtrierung von flüssigen und gasförmigen Medien und ausgestattet mit den verschiedensten Filtermaterialien in zunehmendem Umfang Verwendung finden.

Die bekannten, in größeren Mengen hergestellten zylinderförmigen Filterpatronen bestehen aus einem endständige Flansche tragenden Filterelement und wenigstens einem zylindrischen Stützkäfig, mit dessen Hilfe das gewickelte oder plissierte Filtermedium einer Zugspannung unterworfen wird. Das Filterelement, dessen Ringflansche und der bzw. die beiden Stützkäfige sind bisher von ihrer Herstellung her fest und unlösbar miteinander verbunden, weshalb die Entsorgung der ausgebrauchten Filterpatronen - welche zwangsläufig aus verschiedenen Materialien: das Filtermedium aus Zellulose, aus Keramik oder Kunststoff und der Stützkörper sowie die Flansche aus Metallen bestehen - aufwendig ist (Siehe z.B. US-A-1 710 758). Zur sortenreinen Entsorgung ist die Separierung der unterschiedlichen Werkstoffe unumgänglich, und die hierzu notwendige Zerlegung der verbrauchten Filterpatronen wirft nicht unerhebliche Probleme auf, sie ist zeitaufwendig und teuer. Somit besteht ein dringendes Bedürfnis nach leicht entsorgbaren Filterpatronen.

Es ist die Aufgabe der Erfindung, die Entsorgbarkeit von zur Ein- und Mehrphasentrennung eingesetzten, aus unterschiedlichen Werkstoffen hergestellten Filterpatronen entscheidend zu verbessern.

Zur Lösung der gestellten Aufgabe wird von einer bekannten Filterpatrone mit einem hohlzylindrischen, unter Spannung stehenden Filterelement, welches an seinen beiden Enden jeweils einen Ringflansch trägt und wenigstens einen, zum Filterelement koaxial angeordneten Stützkäfig aufweist, ausgegangen. Gelöst wird die Aufgabe durch wenigstens einen Montagering zwischen einem Ringflansch und dem Stützkäfig zur Herstellung einer lösbaren Verbindung zwischen dem Montagering und dem Stützkäfig sowie durch Spannmittel zwischen dem Montagering und dem Ringflansch, welche das Filterelement spannen, wobei sich der Montagering auf dem Stützkäfig abstützt.

Der Kern der Erfindung ist darin zu sehen, daß die konzipierte Filterpatrone teilbar und leicht in ihre Einzelteile zerlegbar ist. Das Filterelement - bestehend aus plissierten oder gewickelten Filtermedien verschiedenster Materialien - mit seinen anhängenden Ringflanschen läßt sich auf umweltfreundliche Weise problemlos entsorgen, während der Stützkäfig mit dem Gewindering (beispielsweise aus Metall) nach erfolgter Reinigung sehr oft wiederverwendet oder getrennt in das Metall-Recycling abgeführt werden kann. Es ist weiterhin von Vorteil, daß die auf das Filterelement ausgeübte Zugspannung - welche starken Einfluß auf die Filterwirkung besitzt - durch entsprechendes Anziehen der Spannmittel leicht einstellbar ist.

Sinnvoll ist es, wenn der Ringflansch aus Kunststoff oder einem Zellulosefaser-Werkstoff besteht und durch Angießen, Anspritzen oder Ankleben fest mit dem Filterelement verbunden ist.

Nach einem weiteren Merkmal der Erfindung stützt sich der Gewindering mit seiner Unterseite gegen den Stirnrand des jeweiligen Stützkäfigs ab.

Sowohl der Stützkäfig wie der Montagering werden mit Rücksicht auf ihre Stabilität und die Wiederverwendbarkeit zweckmäßig aus Metall bestehen.

Zu Zwecken einwandfreier Zentrierung kann der Montagering an seiner Unterseite eine Ringnut zur Aufnahme des Stirnrandes des Stützkäfigs aufweisen.

Die Ringnut kann ein V-förmiges Profil aufweisen, was den Vorteil hat, daß damit eine Klemmwirkung auf den betreffenden Stirnrand des Stützkäfigs ausgeübt wird.

Um Leckströmungen bei der eingebauten Filterpatrone zu vermeiden, kann jeder Ringflansch an seiner Oberseite eine Ringdichtung tragen.

Bei einer bevorzugten Ausführungsform der Filterpatrone ist der Ringflansch des Filterelementes mit wenigstens einem Gewinde versehen, der Montagering weist ein Gegengewinde auf, der Montagering ist mit seinem Gegengewinde zur Herstellung der lösbaren Verbindung zwischen dem Montagering und dem Stützkäfig auf das Gewinde des Ringflansches aufschraubbar, und das Gewinde dient zusammen mit dem Gegengewinde beim Aufschrauben als Spannmittel für das Filterelement.

Sowohl die Montage sowie das Zerlegen der Filterpatrone kann beschleunigt vor sich gehen, wenn das Gewinde und das Gegengewinde als mehrgängige Trapezgewinde ausgebildet sind.

Bei einer konstruktiven Variante der Erfindung trägt der Ringflansch einen Kranz von Gewindebohrungen, der einzige Montagering sitzt über dem Ringflansch und weist mit den Gewindebohrungen korrespondierende Schraubenlöcher auf, es durchstoßen Kopfschrauben die Schraubenlöcher und sind zur Herstellung der lösbaren Verbindung zwischen dem Montagering und dem Stützkäfig in die Gewindebohrungen einschraubbar und dienen beim Anziehen als Spannmittel für das Filterelement. Diese Ausführungsform eignet sich insbesondere für Filterpatronen mit größeren Durchmessern, bei welchen die Herstellung von Gewinden mit zu großem Aufwand verbunden wäre.

Bei einer anderen vorteilhaften Ausgestaltung der Filterpatrone ist vorgesehen, daß der Ringflansch wenigstens eine Ringschulter trägt, der Montagering über seinem Umfang verteilte Drehzylinder aufweist, die exzentrisch angeordnete Stifte tragen, die Stifte zur Herstellung der lösbaren Verbindung zwischen dem Montagering und dem Stützkäfig die Ringschulter untergreifen, und daß die Drehzylinder als Spannmittel bei ihrem Verdrehen das Filterelement spannen.

Eine weitere, für besonders große Filterpatronen sehr geeignete Ausführungsform ergibt sich, wenn der Ringflansch seitlich angeordnete Sacklöcher aufweist, der Ringflansch unterhalb der Sacklöcher seitlich wenigstens eine Ringleiste trägt, koaxial zum Ringflansch ein Zugring vorgesehen ist, der Zugring zur Herstellung der lösbaren Verbindung zwischen Montagering und Stützkäfig radiale Halteschrauben trägt, die in die Sacklöcher eingreifen, der Zugring als Spannmittel zum Spannen des Filterelementes von Spannschrauben durchsetzt ist, die auf dem Ringflansch aufstehen, und der Montagering seitlich wenigstens eine Ringnut zur Aufnahme der Ringleiste des Ringflansches besitzt.

Die Erfindung wird nachstehend an mehreren Ausführungsbeispielen unter Bezugnahme auf die drei beigefügten Zeichnungsblätter eingehend erläutert. Dabei zeigen
- Figur 1: eine Filterpatrone mit zwei Stützkäfigen und zwei Montageringen in einem Vertikalschnitt in etwa natürlicher Größe;
- Figur 2: eine Teildarstellung einer anderen Filterpatrone mit zwei Stützkäfigen und einem Montagering, ebenfalls in einem Vertikalschnitt;
- Figur 3: eine Teildarstellung einer weiteren Filterpatrone mit zwei Stützkäfigen und zwei Montageringen, die Exzenter aufweisen, in einem Vertikalschnitt;
- Figur 4: eine Teildarstsellung einer vierten Filterpatrone mit zwei Stützkäfigen, zwei Montageringen und zwei Zugringen, wiederum in einem Vertikalschnitt.

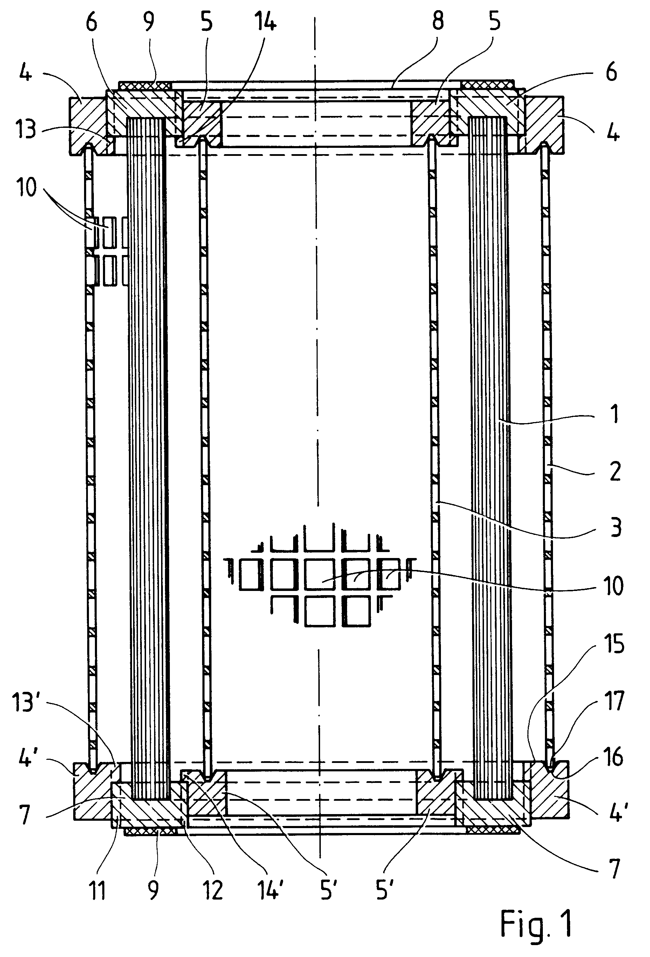

Die in Figur 1 dargestellte kreiszylindrische Filterpatrone ist aus mehreren Teilen zusammengesetzt, nämlich einem Filterelement 1, einem äußeren ersten Stützkäfig 2, einem inneren zweiten Stützkäfig 3, einem äußeren oberen Montagering 4, einem äußeren unteren Montagering 4' sowie einem inneren oberen Montagering 5 und einem inneren unteren Montagering 5'. Die Filterpatrone ist in diese ihre Einzelteile, welche alle eine gemeinsame Achse haben - also koaxial angeordnet sind - leicht zerlegbar.

Das Filterelement 1 ist hohlzylindrisch ausgebildet. Es handelt sich um ein gewickeltes oder in Falten gelegtes (plissiertes) Filtermedium, welches aus unterschiedlichen Materialien, wie Glas, Keramik, Kunststoff-Fasern, Zellulose in Form von Papier oder Vlies, aus Filz, Gewebe oder Stapelfasern bestehen kann. Das Filterelement 1 trägt an seinen beiden Enden jeweils einen oberen Ringflansch 6 und einen unteren Fingflansch 7. Diese beiden kreisringförmigen Ringflansche 6 und 7 besitzen rechteckigen Querschnitt, sie sind identisch geformt und jeweils fest und unlösbar mit dem Filterelement 1 bzw. dessen Filtermedium verbunden.

Die beiden Ringflansche 6 und 7 sind aus einem Kunststoff oder einem Zellulosefaser-Werkstoff hergestellt, welcher entsorgbar bzw. biologisch abbaubar ist. Es findet hier ein gegenüber dem zu filtrierenden Medium beständiger Kunststoff Anwendung, welcher an den beiden Enden des Filterelementes 1 vorzugsweise angegossen ist, aber auch angespritzt sein kann. Diese Ringflansche 6 und 7 können aber auch mit einer geeigneten Klebemasse angeklebt sein. Jeder Ringflansch 6 und 7 trägt an seiner Oberseite 8 eine kreisringförmige, niedere Ringdichtung 9 aus einem elastischen Material, welche nach erfolgtem Einbau der Filterpatrone Leckströmungen verhindert.

Die zwei Stützkäfige 2 und 3 sind kreiszylindrisch ausgebildet, und sie bestehen aus einem mit Löchern 10 bzw. Öffnungen versehenen Metallblech, beispielsweise aus nicht rostendem oder rostgeschütztem Stahlblech oder aus Aluminium. Sie können aber auch aus Streckmetall oder aus einem Drahtgeflecht hergestellt sein. Beide Stützkäfige 2 und 3 sind koaxial zum Filterelement 1 angeordnet und haben verschiedene Durchmesser; das Filterelement 1 sitzt zwischen dem äußeren ersten Stützkäfig 2 und dem inneren zweiten Stützkäfig 3. Die zwischen den beiden Stützkäfigen 2 und 3 und dem Filterelement 1 aus Gründen besserer Übersichtlichkeit dargestellten, kreiszylindrischen Zwischenräume sind in der Wirklichkeit nicht vorhanden, das Filterelement 1 erfüllt im realen Fall den gesamten Raum zwischen den beiden Stützkäfigen 2 und 3 aus.

Jeder der beiden im Querschnitt rechteckigen Ringflansche 6 und 7 des Filterelementes 1 ist mit einem äußeren ersten Gewinde 11 und einem inneren zweiten Gewinde 12 versehen. Beide Gewinde 11 und 12 können mehrgängige Trapezgewinde sein.

Das Filterelement 1 ist bei zusammengesetzter Filterpatrone durch die beiden äußeren oberen und unteren Montageringe 4 und 4' sowie die beiden inneren oberen und unteren Montageringe 5 und 5' mit den beiden Stützkäfigen 2 und 3 lösbar verbunden. Die vier genannten Montageringe bestehen aus Metall, beispielsweise Aluminium. Die beiden äußeren Montageringe 4 und 4' tragen innere Gegengewinde 13, 13', und die beiden inneren Montageringe 5 und 5' sind mit äußeren Gegengewinden 14, 14' versehen. Die vier Montageringe 4, 4' und 5, 5' sind mit ihren Gegengewinden 13, 13' und 14, 14' auf die Gewinde 11 und 12 der beiden Ringflansche 6 und 7 aufgeschraubt. Dabei stützen sich die Montageringe 4 und 4' und 5, 5' gegen den äußeren und den inneren Stützkäfig 2 bzw. 3 ab. Die beiden Gewinde 11 und 12 stellen zusammen mit den jeweiligen Gegengewinden 13, 13' und 14, 14' lösbare Verbindungen zwischen den Montageringen 4, 4', 5, 5' und den beiden Stützkäfigen 2 und 3 her.

Die vier Montageringe 4, 4', 5, 5' weisen an ihren jeweils gegeneinandergerichteten Unterseiten 14 jeweils eine Ringnut 16 zur Aufnahme des jeweiligen Stirnrandes 17 des betreffenden Stützkäfigs 2, 3 auf. Diese Ringnut 16 besitzt ein V-förmiges Profil.

Beim Zusammensetzen der Filterpatrone wird nach erfolgtem Aufschrauben der vier Montageringe 4, 4', 5, 5' auf die Gewinde 11 und 12 der Ringflansche 6, 7 des Filterelementes 1 auf das Filterelement 1 bzw. dessen an den Ringflanschen 6, 7 befestigten Filtermedium bei Ausübung von mäßigen Drehkräften eine gewisse axial gerichtete Zugspannung ausgeübt und damit das Filtermedium gespannt, was für eine einwandfreie Filterwirkung unumgänglich ist.

Durch Lösen der vier Montageringe 4, 4' und 5, 5' wird auf einfache Weise die Filterpatrone vollständig in ihre Bestandteile zerlegt. Das Filterelement 1 mit dem Filtermedium und seinen beiden Ringflanschen 6 und 7 läßt sich der Entsorgung zuführen, während die metallenen Stützkäfige 2 und 3 sowie die vier aus Metall bestehenden Montageringe 4, 4', 5, 5' (u.U. zusammen mit den Ringdichtungen 9) gereinigt und wiederverwendet werden können.

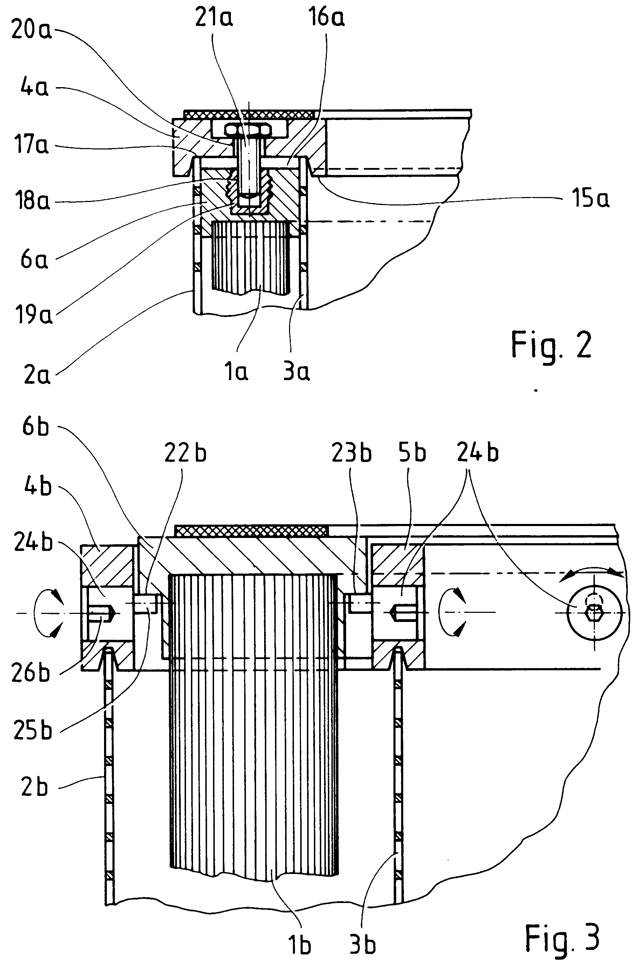

Eine andere, zweite Ausführungsform der Filterpatrone ist der Teildarstellung nach Figur 2 zu entnehmen. Diese Filterpatrone entspricht im Prinzip derjenigen gemäß Figur 1, jedoch ist hier nur ein einziger oberer Montagering 4a (und gegebenenfalls ein unterer Montagering) vorhanden.

Der obere Montagering 4a sitzt über dem oberen Ringflansch 6a, welcher an seiner Stirnseite einen Kranz von Gewindebohrungen 18a trägt. Die Gewindebohrungen 18a sind Bestandteil von Gewindebüchsen 19a, die in dem aus Kunststoff - beispielsweise aus Polyurethan, Poystyrol oder Epoxidharz - hergestellten Ringflansch 6a ebenso wie das Filterelement 1a eingegossen sind. Der Ringflansch 6a sitzt zwischen dem äußeren Stützkäfig 2a und dem inneren Stützkäfig 3a. Der obere Montagering 4a besitzt an seiner Unterseite 15a eine breite Ringnut 16a zur Aufnahme der Stirnränder 17a der beiden Stützkäfige 2a und 2b.

Der Montagering 4a weist einen Ring von über seinem Umfang verteilten Schraubenlöchern 20 a auf, die mit den Gewindebohrungen 18a korrespondieren bzw. fluchten. Der Montagering 4a ist mittels einer der Anzahl der Schraubenlöcher 20a entsprechenden Zahl von Kopfschrauben 21a lösbar mit dem Ringflansch 6a verbunden. Durch Anziehen der Kopfschrauben 21a wird das Filterelement 1a gespannt.

Eine weitere, dritte Variante der in Verbindung mit Figur 1 bereits ausführlich erläuterten Filterpatrone ist in Figur 3 soweit zum Verständnis erforderlich dargestellt. Bei dieser Filterpatrone trägt der obere Ringflansch 6b eine ringsumlaufende, äußere Ringschulter 22b und eine innere Ringschulter 23b. In den äußeren oberen Montagering 4b und den inneren oberen Montagering 5b sind - jeweils über deren Umfang verteilt - Drehyzlinder 24b aus Stahl eingelassen, die jeweils einen exzentrisch angeordneten Stift 25b tragen. Diese Stifte 25b untergreifen die Ringschultern 22b bzw. 23b und stellen dadurch die lösbare Verbindung zwischen dem jeweiligen Montagering 4b bzw. 5b und dem äußeren Stützkäfig 2b bzw. dem inneren Stützkäfig 3b her. Die als Spannmittel dienenden Drehzylinder 24 b tragen zu ihrer Betätigung jeweils einen Innensechskant 26b und spannen beim Verdrehen entsprechend der Pfeile das Filterelement 1b.

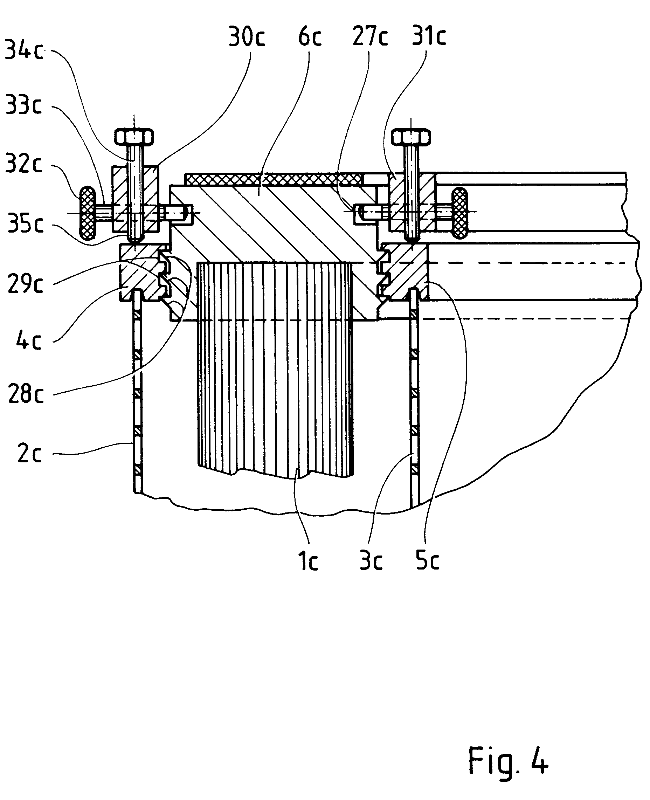

Eine vierte Möglichkeit der Ausbildung der Filterpatrone verdeutlicht die Figur 4. Hier weist der obere Ringflansch 6c außen und innen an der Seite angeordnete und über dem Umfang verteilte Sacklöcher 27c sowie darunter drei im Querschnitt sägezahnförmige Ringleisten 28c auf. Der äußere obere Montagering 4c und der innere obere Montagering 5c besitzen jeweils umlaufende Ringnuten 29c, in welche die Ringleisten 28c eingreifen. Über jedem Montagering 4c bzw. 5c befindet sich koaxial ein äußerer Zugring 30c bzw. ein innerer Zugring 31c, die beide aus Metall bestehen. Zwecks Herstellung der lösbaren Verbindung zwischen den Montageringen 4c bzw. 5c und dem äußeren Stützkäfig 2c bzw. dem inneren Stützkäfig 3c tragen die beiden Zugringe 30c und 31c in Gewinden radial angeordnete und mit einem Rändelkopf 32c versehene Halteschrauben 33c, welche in die Sacklöcher 27c eingreifen. Die Zugringe 30c und 31c sind weiterhin von einem Kranz von Spannschrauben 34c mit Sechskantkopf durchsetzt, deren Enden 35c auf den Oberseiten der darunterliegenden Montageringe 4c und 5c aufstehen und somit als Spannmittel zum Spannen des Filterelementes 1c dienen.

### Zusammenstellung der verwendeten Bezugsziffern

- 1: Filterelement
- 2: äußerer erster Stützkäfig
- 3: innerer zweiter Stützkäfig
- 4: äußerer oberer Montagering
- 4': äußerer unterer Montagering
- 5: innerer oberer Montagering
- 5': innerer unterer Montagering
- 6: oberer Ringflansch
- 7: unterer Ringflansch
- 8: Oberseite (von 6 bzw. 7)
- 9: Ringdichtung
- 10: Löcher
- 11: (äußeres) erstes Gewinde (von 6 und 7)
- 12: (inneres) zweites Gewinde (von 6 und 7)
- 13: inneres Gegengewinde (von 4)
- 13': inneres Gegengewinde (von 4')
- 14: äußeres Gegengewinde (von 5)
- 14': äußeres Gegengewinde (von 5')
- 15: Unterseiten (von 4, 4', 5, 5')
- 16: Ringnut (in 15)
- 17: Stirnränder (von 2 und 3)
- 4a: oberer Montagering
- 6a: oberer Ringflansch
- 18a: Gewindebohrungen
- 19a: Gewindebuchsen
- 2a: äußerer Stützkäfig
- 3a: innerer Stützkäfig
- 15a: Unterseite
- 16a: Ringnut
- 17a: Stirnränder
- 20a: Schraubenlöcher
- 21a: Kopfschrauben
- 1a: Filterelement
- 6b: oberer Ringflansch
- 22b: äußere Ringschulter
- 23b: innere Ringschulter
- 4b: äußerer oberer Montagering
- 5b: innerer oberer Montagering
- 24b: Drehzylinder
- 25b: Stift
- 2b: äußerer Stützkäfig
- 3b: innerer Stützkäfig
- 26b: Innensechskant
- 1b: Filterelement
- 6c: oberer Ringflansch
- 27c: Sacklöcher
- 28c: Ringleisten
- 4c: äußerer oberer Montagering
- 5c: innerer oberer Montagering
- 29c: Ringnuten
- 30c: äußerer Zugring
- 31c: innerer Zugring
- 2c: äußerer Stützkäfig
- 3c: innerer Stützkäfig
- 32c: Rändelkopf
- 33c: Halteschrauben
- 34c: Spannschrauben
- 35c: Enden (von 34c)
- 1e: Filterelement

## Patentansprüche

1. Filterpatrone, mit
- einem hohlzylindrischen Filterelement,
- wenigstens einem, zum Filterelement koaxial angeordneten Stützkäfig,
- zwei Montageringen zur Herstellung einer lösbaren Verbindung zwischen dem Filterelement und dem Stützkäfig und
- Spannmitteln zwischen den Montageringen und dem Ringflansch, welche das Filterelement festlegen,
dadurch gekennzeichnet,
- daß beide Enden des Filterelements (1) jeweils mit einem Ringflansch (6, 7) fest verbunden sind und
- daß sich die Montageringe (4, 4') jeweils auf dem Stützkäfig abstützen, so daß beim Spannen das Filterelement (1) unter axiale Zugspannung gesetzt wird.

2. Filterpatrone nach Anspruch 1, dadurch **gekennzeichnet,** daß der Ringflansch (6, 7; 6a; 6b; 6c) aus Kunststoff oder einem Zellulosefaser-Werkstoff besteht und durch Angießen, Anspritzen oder Ankleben fest mit dem Filterelement (1; 1a; 1b; 1c) verbunden ist.

3. Filterpatrone nach Anspruch 1 oder 2, dadurch **gekennzeichnet,** daß sich der Montagering (4, 4', 5, 5'; 4a; 4b, 5b; 4c, 5c) mit seiner Unterseite (15) gegen den Stirnrand (17) des Stützkäfigs (2, 3; 2a, 3a; 2b, 3b; 2c, 3c) abstützt.

4. Filterpatrone nach einem der Ansprüche 1 bis 3, dadurch **gekennzeichnet,** daß der Stützkäfig (2, 3; 2a, 3a; 2b, 3b; 2c, 3c) und der Montagering (4, 4'; 5, 5'; 4a; 4b, 5b; 4c, 5c) aus Metall hergestellt sind.

5. Filterpatrone nach einem der Ansprüche 1 bis 4, dadurch **gekennzeichnet,** daß der Montagering (4, 4', 5, 5'; 4a; 4b, 5b; 4c, 5c) an seiner Unterseite (15) eine Ringnut (16) zur Aufnahme des Stirnrandes (17) des Stützkäfigs (2, 3; 2a, 3a; 2b, 3b; 2c, 3c) aufweist.

6. Filterpatrone nach Anspruch 5, dadurch **gekennzeichnet,** daß die Ringnut (16) ein V-förmiges Profil aufweist.

7. Filterpatrone nach einem der Ansprüch 1 bis 6, dadurch **gekennzeichnet,** daß der Ringflansch (6, 7; 6a, 6b; 6c) eine Ringdichtung (9) trägt.

8. Filterpatrone nach einem der Ansprüche 1 bis 7, dadurch **gekennzeichnet,** daß der
- Ringflansch (6, 7) des Filterelementes (1) mit wenigstens einem Gewinde (11, 12) versehen ist,
- der Montagering (4, 4'; 5, 5') ein Gegengewinde (13, 13'; 14, 14') aufweist,
- der Montagering (4, 4'; 5, 5') mit seinem Gegengewinde (13, 13'; 14, 14') zur Herstellung der lösbaren Verbindung zwischen dem Montagering (4, 4'; 5, 5') und dem Stützkäfig (2, 3) auf das Gewinde (11, 12) des Ringflansches (6, 7) aufschraubbar ist,
- das Gewinde (11, 12) zusammen mit dem Gegengewinde (13, 13'; 14, 14') beim Aufschrauben als Spannmittel für das Filterelement (1) dient.

9. Filterpatrone nach Anspruch 8, dadurch **gekennzeichnet,** daß das Gewinde (11, 12) und das Gegengewinde (13, 13'; 14, 14') als mehrgängige Trapezgewinde ausgebildet sind.

10. Filterpatrone nach einem der Ansprüche 1 bis 7, dadurch **gekennzeichnet,** daß
- der Ringflansch (6a) einen Kranz von Gewindebohrungen 18a) trägt,
- der Montagering (4a) über dem Ringflansch (6a) sitzt und mit den Gewindebohrungen (18a) korrespondierende Schraubenlöcher (20a) aufweist,
- Kopfschrauben (21a) die Schraubenlöcher (20a) durchstoßen und zur Herstellung der lösbaren Verbindung zwischen dem Montagering (4a) und dem Stützkäfig (2a, 3a) in die Gewindebohrungen (18a) einschraubbar sind und beim Anziehen als Spannmittel für das Filterelement (1a) dienen.

11. Filterpatrone nach einem der Ansprüche 1 bis 7, dadurch **gekennzeichnet,** daß
- der Ringflansch (6b) wenigstens eine Ringschulter (22 b, 23 b) trägt,
- der Montagering (4b, 5b) über seinem Umfang verteilte Drehzylinder (24b) aufweist, die exzentrisch angeordnete Stifte (25b) tragen,
- die Stifte (25b) zur Herstellung der lösbaren Verbindung zwischen dem Montagering (4b, 5b) und dem Stützkäfig (2b, 3b) die Ringschulter (22b, 23b) untergreifen, und
- die Drehzylinder (24b) als Spannmittel bei ihrem Verdrehen das Filterelement (1b) spannen.

12. Filterpatrone nach einem der Ansprüche 1 bis 7, dadurch **gekennzeichnet,** daß
- der Ringflansch (6c) seitlich angeordnete Sacklöcher (27c) aufweist,
- der Ringflansch (6c) unterhalb der Sacklöcher (27c) seitlich wenigstens eine Ringleiste (28c) trägt,
- koaxial zum Ringflansch (6c) ein Zugring (30c, 31c) vorgesehen ist,
- der Zugring (30c, 31c) zur Herstellung der lösbaren Verbindung zwischen Montagering (4c, 5c) und Stützkäfig (2c, 3c) radiale Halteschrauben (33c) trägt, die in die Sacklöcher (27c) eingreifen,
- der Zugring (30c, 31c) als Spannmittel zum Spannen des Filterelementes (1c) von Spannschrauben (34c) durchsetzt ist, die auf dem Ringflansch (6c) aufstehen, und
- der Montagering (4c, 5c) seitlich wenigstens eine Ringnut (29c) zur Aufnahme der Ringleiste (28c) des Ringflansches (6c) besitzt.

## Claims

1. A filter cartridge comprising
- a hollow cylindrical filter element,
- at least one supporting cage coaxial with the filter element,
- two mounting rings for establishing a releasable connection between the filter element and the supporting cage and
- tensioning means between the mounting rings and the annular flange for tensioning the filter element
**characterized** in that
- both ends each of filter element (1) are fast connected with an annular flange (6, 7) and
- both mounting rings (4, 4') are supported by the supporting cage to achieve axial tension when tensioning the filter element (1).

2. A filter cartridge according to claim 1, **characterized** in that the annular flange (6, 7; 6a; 6b; 6c) is made of plastic or a cellulose fiber material and is fixed to the filter element (1; 1a; 1b; 1c) by casting, injection molding or gluing.

3. A filter cartridge according to claim 1 or 2 **characterized** in that the underside (15) of the mounting ring (4, 4', 5, 5'; 4a; 4b, 5b; 4c, 5c) is supported by the front edge (17) of the supporting cage (2, 3; 2a, 3a; 2b, 3b; 2c, 3c).

4. A filter cartridge according to claim 1 to 3, **characterized** in that the supporting cage (2, 3; 2a, 3a; 2b, 3b; 2c, 3c) and the mounting ring (4, 4'; 5, 5'; 4a; 4b, 5b; 4c, 5c) are made of metal.

5. A filter cartridge according to claim 1 to 4, **characterized** in that, at its underside (15), the mounting ring (4, 4', 5, 5'; 4a; 4b, 5b; 4c, 5c) is provided with an annular groove (16) to accommodate the front edge (17) of the supporting cage (2,3; 2a, 3a; 2b, 3b; 2c,3c).

6. A filter cartridge according to claim 5, **characterized** in that the annular groove (16) has a v-shaped profile.

7. A filter cartridge according to claim 1 to 6 **characterized** in that the annular flange (6, 7; 6a, 6b; 6c) is provided with an annular seal (9).

8. A filter cartridge according to claim 1 to 7, **characterized** in that the annular flange (6, 7) of the filter element (1) is provided with at least one thread (11, 12); the mounting ring (4, 4'; 5, 5') is provided with a mating thread (13, 13'; 14, 14'); the mating thread (13, 13'; 14, 14') of the mounting ring (4, 4'; 5, 5') can be screwed onto the thread (11, 12) of the annular flange (6, 7) in order to establish the releasable connection between the mounting ring (4, 4'; 5, 5') and the supporting cage (2, 3); the thread (11, 12), together with the mating thread (13, 13'; 14, 14') serves as a tensioning means for the filter element when they are screwed together.

9. A filter cartridge according to claim 8, **characterized** in that the thread (11, 12) and the mating thread (13, 13'; 14, 14') are configured as multi-turn trapezoidal threads.

10. A filter cartridge according to claim 1 to 7 **characterized** in that the annular flange (6a) is provided with a ring of thread bores (18a); the mounting ring (4a) is seated above the annular flange (6a) and is provided with screw holes (18a) that mate with the threaded bores (20a); head screws (21a) penetrate the screw holes (20a) and can be screwed into the threaded bores (18a) in order to establish the releasable connection between the mounting ring (4a) and the supporting cage (2a, 3a) and, when tightened, they serve as tensioning means for the filter element (1a).

11. A filter cartridge according to claim 1 to 7, **characterized** in that the annular flange (6b) is provided with at least one annular shoulder (22b, 23b); the mounting ring (4b, 5b) is provided with rotary cylinders (24b) that are distributed over its circumference and are equipped with eccentric pins (25b); the pins engage underneath the annular shoulder (22b, 23b) in order to establish the releasable connection between the mounting ring (4b, 5b) and the supporting cage (2b, 3b); and the rotary cylinders (24b) serve as tensioning means and, when rotated, tension the filter element (1b).

12. A filter cartridge according to claim 1 to 7 **characterized** in that the annular flange (6c) is provided with blind bores (27c) on its side; underneath the blind bores (27c) and on its side the annular flange (6c) is provided with at least one annular ledge (28c); a traction ring (30c, 31c) is provided coaxially with the annular flange (6c); the traction ring (30c, 31c) is provided with radial holding screws (33c) which engage in the blind bores (27c) so as to establish the releasable connection between the mounting ring (4c, 5c) and the supporting cage (2c, 3c); the traction ring (30c, 31c) serves as the tensioning means for tensioning the filter element (1c) and is penetrated by tensioning screws (34c) which rest on the annular flange (6c); and the mounting ring (4c, 5c) is provided with at least one annular groove (29c) its side for accommodating the annular ledge (28c) of the annular flange (6c).

## Revendications

1. Cartouche filtrante avec
- un élément filtrant à cylindre creux
- au moins une cage d'appui, alignée coaxialement par rapport à l'élément filtrant
- deux anneaux de montage pour la création d'une liaison démontable entre l'élément filtrant et la cage d'appui et
- des pièces de serrage entre les anneaux de montage et la collerette, qui fixent l'élément filtrant.
**se caractérisant** par le fait
- que les deux extrémités de l'élément filtrant (1) sont fixées par une collerette (6, 7) et
- que les anneaux de montage (4, 4') s'appuient sur la cage d'appui, de manière à ce qu'en serrant, l'élément filtrant (1) soit soumis à une contrainte de traction axiale.

2. Cartouche filtrante selon revendication 1, **se caractérisant** par le fait que la collerette (6, 7, 6a, 6b, 6c) est en plastique ou en une matière de fibres de cellulose est qu'elle est fixée de manière indémontable à l'élément filtrant (1, 1a, 1b, 1c) par fonte, colle ou autre.

3. Cartouche filtrante selon revendications 1 et 2, **se caractérisant** par le fait que l'anneau de montage (4, 4', 5, 5', 4a, 4b, 5b, 4c, 5c) s'appuie avec son côté inférieur (15) sur le bord frontal (17) de la cage d'appui (2, 3, 2a, 3a, 2b, 3b, 2c, 3c).

4. Cartouche filtrante selon l'une des revendications 1 à 3, **se caractérisant** par le fait que la cage d'appui (2, 3, 2a, 3a, 2b, 3b, 2c, 3c) et l'anneau de montage (4, 4', 5, 5', 4a, 4b, 5b, 4c, 5c) sont en métal.

5. Cartouche filtrante selon l'une des revendications 1 à 4, **se caractérisant** par le fait que l'anneau de montage (4, 4', 5, 5', 4a, 4b, 5b, 4c, 5c) présente sur son côté inférieur (15) une rainure circulaire (16) pour recevoir le bord frontal (17) de la cage d'appui (2, 3, 2a, 3a, 2b, 3b, 2c, 3c).

6. Cartouche filtrante selon revendication 5, **se caractérisant** par le fait que la rainure circulaire (15) présente un profil en forme de v.

7. Cartouche filtrante selon l'une des revendications 1 à 6, **se caractérisant** par le fait que la collerette (6, 7, 6a, 6b, 6c) porte un joint d'étanchéité (9).

8. Cartouche filtrante selon l'une des revendications 1 à 7, **se caractérisant** par le fait que
- la collerette (6, 7) de l'élément filtrant (1) est équipée d'au moins un filetage (11, 12).
- que l'anneau de montage (4, 4', 5, 5') possède un contre-filetage (13, 13', 14, 14').
- que l'anneau de montage (4, 4', 5, 5') possède un contre-filetage (13, 13', 14, 14') pour la réalisation de la liaison démontable entre l'anneau de montage (4, 4', 5, 5') et la cage d'appui (2, 3) et qu'il peut être vissé sur le filetage (11, 12) de la collerette (6, 7).
- que le filetage (11, 12) sert avec le contre-filetage (13, 13', 14, 14') pendant le montage comme pièce de serrage pour l'élément filtrant (1).

9. Cartouche filtrante selon revendication 8, **se caractérisant** par le fait, que le filetage (11, 12) et le contre-filetage (13, 13', 14, 14') sont réalisés comme filetages trapézoïdaux multiples.

10. Cartouche filtrante selon l'une des revendications 1 à 7, **se caractérisant** par le fait que
- la collerette (6a) porte une couronne de trous filetés (18a)
- l'anneau de montage (4a) se trouve au dessus de la collerette (6a) et possède des trous de vis (20a) correspondant aux trous filetés (18a)
- les vis à tête (21a) passent dans les trous de vis (20a) et se vissent pour la réalisation de la liaison démontable entre l'anneau de montage (4a) et la cage d'appui (2a, 3a) dans les trous filetés (18a) et qu'elles servent comme pièces de serrage pour l'élément filtrant (1a).

11. Cartouche filtrante selon l'une des revendications 1 à 7, **se caractérisant** par le fait que
- la collerette (6b) possède au moins un collier circulaire (22b, 23b)
- l'anneau de montage (4b, 5b) possède des cylindres tournants (24b) sur toute sa circonférence, et qui portent des tiges excentriques (25b)
- les tiges (25b) pour la réalisation d'une liaison démontable entre l'anneau de montage (4b, 5b) et la cage d'appui (2b, 3b) rentrent dans le collier circulaire (22b, 23b) et
- les cylindres tournants (24b) servent de pièces de serrage pour l'élément filtrant (1b) en tournant.

12. Cartouche filtrante selon l'une des revendications 1 à 7, **se caractérisant** par le fait que
- la collerette (6c) possède des logements à fond plein (27c) latéraux
- la collerette (6c) possède en dessous des logements à fond plein (27c) au moins une barre circulaire (28c)
- un anneau de fermeture (30c, 31c) et prévu coaxialement par rapport à la collerette (6c)
- l'anneau de fermeture (30c, 31c) possède pour la réalisation de la liaison démontable entre l'anneau de montage (4c, 5c) et la cage d'appui (2c, 3c) des vis de fixation radiales (33c), qui sont fixées dans les logements à fond plein (27c)
- l'anneau de fermeture (30c, 31c) sert de pièce de serrage pour le serrage de l'élément filtrant (1c) à l'aide de vis de serrage (24c) se trouvant sur lui et qui dépassent de la collerette (6c)
- l'anneau de montage (4c, 5c) possède latéralement au moins une rainure circulaire (29c) pour recevoir la barre circulaire (28c) de la collerette (6c).
